# EUROPÄISCHE PATENTSCHRIFT

(11) **EP 1 616 766 B1**
(45) Veröffentlichungstag und Bekanntmachung des Hinweises auf die Patenterteilung: **07.04.2010**
(21) Anmeldenummer: 05015224.8
(22) Anmeldetag: 13.07.2005
(51) Int. Cl.: B60T 8/32

(54) **Steuermodul für eine Anhängerbremsanlage und Verfahren zum Steuern pneumatischer Funktionen eines Nutzkraftfahrzeuganhängers**
Command module and control method for a pneumatic trailer brake
Module et méthode de contrôle pour un frein pneumatique de remorque

(30) Priorität: 16.07.2004 DE 102004034466
(43) Veröffentlichungstag der Anmeldung: 18.01.2006
(73) Patentinhaber: KNORR-BREMSE Systeme für Nutzfahrzeuge GmbH, 80809 München (DE)
(72) Erfinder: Bobinger, Georg, 80687 München (DE); Matolcsi, István, 80807 München (DE); Mederer, Martin, 92318 Neumarkt (DE); Palkovics, László, 1111 Budapest (HU)
(74) Vertreter: Schönmann, Kurt

(56) Entgegenhaltungen:
- WO-A-03/053758
- DE-C1- 19 514 185
- DE-C1- 19 544 622
- DE-U1- 20 122 549

## Beschreibung

Die Erfindung betrifft ein Steuermodul für eine Anhängerbremsanlage eines Nutzkraftfahrzeugs, mit mindestens einem Druckluft-Steuereingang zum Zuführen eines Steuerdrucks, mindestens einem Druckluft-Vorratseingang zum Zuführen eines Vorratsdrucks, mehreren Druckluftausgängen für den Anschluss von Bremselementen und mehreren elektrisch ansteuerbaren Magnetventilen sowie mehreren mit den Magnetventilen zusammenwirkenden Relaisventilen, die so angeordnet sind, dass die Druckluftausgänge in Abhängigkeit der Schaltzustände der Magnetventile mit Druck beaufschlagt werden können.

Die Erfindung betrifft weiterhin ein Verfahren zum Steuern pneumatischer Funktionen eines Nutzkraftfahrzeuganhängers mit einem Steuermodul mit mindestens einem Druckluft-Steuereingang zum Zuführen eines Steuerdrucks, mindestens einem Druckluft-Vorratseingang zum Zuführen eines Vorratsdrucks, mehreren Druckluftausgängen für den Anschluss von Bremselementen und mehreren elektrisch ansteuerbaren Magnetventilen sowie mehreren mit den Magnetventilen zusammenwirkenden Relaisventilen, die so angeordnet sind, dass die Druckluftausgänge in Abhängigkeit der Schaltzustände der Magnetventile mit Druck beaufschlagt werden.

Derartige Steuermodule kommen im Rahmen eines elektronischen Bremssystems (EBS) für Anhänger zum Einsatz.

Es sind verschiedene Lösungen zur Realisierung eines solchen Steuermoduls bekannt. Ältere Lösungen verwenden pro Fahrzeugseite drei Magnetventile, um die Basisbremsfunktionen ausführen zu können. Gemäß neueren Ansätzen sind hierfür nur noch vier Magnete erforderlich. Ein derartiges System ist in der WO 03/053758 A1 veröffentlicht.

Neben der Steuerung der Basisbremsfunktionen ist ein elektronisches Bremssystem auch geeignet, weitere den Anhänger betreffende Funktionen zu steuern. Hierzu zählt beispielsweise eine mit einer Hebe-Senk-Einrichtung zusammenhängende automatische Rückstellung (RTR = "Reset to Ride"). Ein Hebe-Senk-Ventil dient bei einem Nutzkraftfahrzeuganhänger dazu, die Ladefläche im Stillstand des Anhängers bedarfsgemäß zu senken oder anzuheben. Zu diesem Zweck werden Federbälge entlüftet beziehungsweise belüftet. Da der Zustand der Federbälge einen Einfluss auf die sonstigen EBS-Funktionen hat, ist es erforderlich, bei Wiederaufnahme des Fahrbetriebs beziehungsweise ab einer bestimmten Höchstgeschwindigkeit, eine automatische Rückstellung des Hebe-Senk-Ventils vorzunehmen. Zu diesem Zweck erfolgt gemäß dem Stand der Technik eine elektrische Ansteuerung des Hebe-Senk-Ventils durch die Steuerung des elektronischen Bremssystems. Ein weiteres Beispiel für einen Zusatzverbraucher, der von der Steuerung des elektronischen Bremssystems elektrisch angesteuert wird, ist das Liftachsventil der Liftachssteuerung (LAC).

Der Erfindung liegt die Aufgabe zugrunde, ein Steuermodul des Standes der Technik mit geringem konstruktivem Aufwand so weiterzubilden, dass neben den Basisbremsfunktionen eine Steuerung von Zusatzverbrauchern möglich ist, ohne auf eine direkte Ansteuerung durch die Steuerung des elektronischen Bremssystems angewiesen zu sein.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung baut auf dem gattungsgemäßen Steuermodul dadurch auf, dass mindestens ein weiterer Druckluftausgang für den Anschluss und die pneumatische Ansteuerung mindestens eines Zusatzverbrauchers vorgesehen ist und dass mindestens ein weiteres ansteuerbares Magnetventil so angeordnet ist, dass der weitere Druckluftausgang in Abhängigkeit des Schaltzustands des Magnetventils mit Druck beaufschlagt werden kann. Im Gegensatz zu der Lösung des Standes der Technik, bei der Zusatzverbraucher elektrisch angesteuert werden, findet erfindungsgemäß eine pneumatische Ansteuerung statt.

Die Erfindung baut in besonders vorteilhafter Weise dadurch auf dem Stand der Technik auf, dass zwei Druckluftausgänge für den Anschluss von Bremselementen und vier mit zwei Relaisventilen zusammenwirkende Magnetventile vorgesehen sind und dass zwei Druckluftausgänge für den Anschluss von Zusatzverbrauchern und zwei weitere diesen Druckluftausgängen zugeordnete Magnetventile vorgesehen sind. Geht man von einem Steuermodul des Standes der Technik mit sechs Magnetventilen aus, das heißt einem Backupmagnetventil, einem Belüftemagnetventil und einem Entlüftemagnetventil für jede Fahrzeugseite, so lässt sich die vorliegende Erfindung ohne großen konstruktiven Aufwand realisieren. Die Basisbremsfunktionen lassen sich auch durch vier Magnetventile realisieren, so dass die verbleiben Magnetventile für die pneumatische Ansteuerung der Zusatzverbraucher zur Verfügung stehen.

Nützlicherweise ist vorgesehen, dass die mit den Relaisventilen zusammenwirkenden Magnetventile zwei 2/2-Ventile und zwei 3/2-Ventile umfassen und dass das mindestens eine weitere Magnetventil ein 3/2-Ventil ist. Die Auslegung der mit den Relaisventilen zusammenwirkenden Magnetventile als zwei 2/2-Ventile und zwei 3/2-Ventile bietet die Möglichkeit, die Basisbremsfunktionen gemäß der Offenbarung der WO 03/053758 A1 zu realisieren. Die Magnetventile für die Zusatzverbraucher sind als 3/2-Ventile ausgelegt, um so wahlweise eine Entlüftung des pneumatischen Steuerausgangs zur Atmosphäre oder eine Verbindung des pneumatischen Steuerausgangs mit dem Vorratsdruck realisieren zu können.

Es ist bevorzugt, dass Drucksensoren zum Erfassen von Drücken an Anschlüssen des Steuermoduls vorgesehen sind. Durch das Auswerten der von den Drucksensoren erfassten Drücke lässt sich das Bremssystem überwachen. Um sicherzustellen, dass die Bremsfunktionen von dem Steuermodul bevorzugt zur Verfügung gestellt werden, werden die Drücke insbesondere an den Druckluftausgängen erfasst. Erst wenn ein vorgegebener Mindestdruck für die Bremsfunktionen zur Verfügung steht, können die Zusatzverbraucher im Rahmen einer Priorisierung versorgt werden.

Es kann von besonderem Vorteil sein, dass mindestens ein Drucksensor über ein Magnetventil je nach Schaltzustand des Magnetventils mit unterschiedlichen Messpunkten verbunden werden kann. Durch diese Multiplexfunktion erreicht man eine Reduzierung der erforderlichen Drucksensoren und somit eine Reduzierung von Kosten.

Die Erfindung ist in vorteilhafter Weise dadurch weitergebildet, dass als Zusatzverbraucher ein Hebe-Senk-Ventil mit automatischer Rückstellung (RTR-Ventil) und/oder ein Liftachsventil (LAC-Ventil) und/oder ein 2/2-Ventil anschließbar sind. Hierbei handelt es sich nur um einige Beispiele von Zusatzverbrauchern. Jede Zusatzfunktion im Anhänger ist der pneumatischen Ansteuerung grundsätzlich zugänglich.

Das Steuermodul ist weiterhin dadurch besonders vorteilhaft ausgebildet, dass es eine elektronische Steuerung zum Ansteuern der Magnetventile und zum Erfassen und Verarbeiten von druckabhängigen Signalen aufweist. Die elektronische Steuerung ist somit integrierter Bestandteil des Steuermoduls und damit insbesondere mit den beschriebenen Ventilen, Drucksensoren und weiteren Bauteilen des Steuermoduls baulich vereinigt.

Die Erfindung baut auf dem erfindungsgemäßen Verfahren dadurch auf, dass über mindestens einen weitere Druckluftausgang mindestens ein Zusatzverbraucher pneumatisch angesteuert wird und dass mindestens ein weiteres elektrisch ansteuerbares Magnetventil so angeordnet ist, dass der weitere Druckluftausgang in Abhängigkeit des Schaltzustands des Magnetventils mit Druck beaufschlagt wird. Hierdurch werden die Vorteile und Besonderheiten des erfindungsgemäßen Steuermoduls auch im Rahmen eines Verfahrens umgesetzt. Dies gilt auch für die nachfolgend angegebenen besonders bevorzugten Ausführungsformen des erfindungsgemäßen Verfahrens.

Dieses zeichnet sich unter anderem dadurch aus, dass zum Erfassen eines Drucks an einem einer Betriebsbremse zugeordneten Ausgang ein Drucksensor über ein 2/2-Magnetventil im unbestromten Zustand mit dem Ausgang verbunden wird und dass zum Erfassen eines Drucks an einem Anschluss des Steuermoduls der Drucksensor über das 2/2-Magnetventil im bestromten Zustand mit dem Anschluss verbunden wird.

Beispielsweise ist es nützlich, dass über das Steuermodul als Zusatzverbraucher ein Hebe-Senk-Ventil mit automatischer Rückstellung (RTR-Ventil) und/oder ein Liftachsventil (LAC-Ventil) und/oder ein 2/2-Ventil pneumatisch angesteuert werden.

Die Erfindung betrifft weiterhin ein Nutzfahrzeug mit einem erfindungsgemäßen Steuermodul.

Der Erfindung liegt die Erkenntnis zugrunde, dass, ausgehend von einem Steuermodul des Standes der Technik, ohne großen konstruktiven Aufwand ein Steuermodul zur Verfügung gestellt werden kann, dass einerseits die Basisbremsfunktionen des elektronischen Bremssystems zur Verfügung stellt und andererseits eine pneumatische Ansteuerung von Zusatzverbrauchern gestattet.

Die Erfindung wird nun mit Bezug auf die begleitende Zeichnung anhand einer bevorzugten Ausführungsform beispielhaft erläutert.

Dabei zeigt:
- Figur 1: eine schematische Darstellung einer ersten Ausführungsform eines erfindungsgemäßen Steuermodulsund
- Figur 2: eine schematische Darstellung einer zweiten Ausführungsform eines erfindungsgemäßen Steuermoduls.

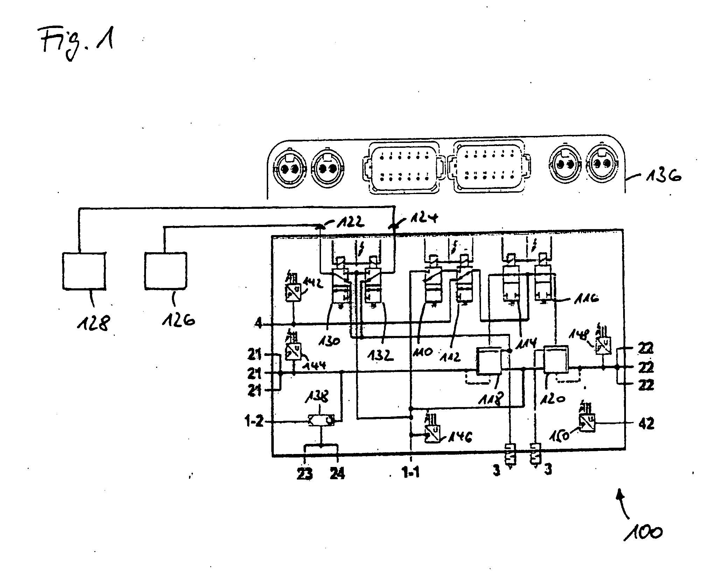

Figur 1 zeigt eine schematische Darstellung einer ersten Ausführungsform eines erfindungsgemäßen Steuermoduls 100. Das Steuermodul 100 hat einen Druckluftsteuereingang 4, dem ein Steuerdruck von einem (nicht dargestellten) Bremsventil zugeführt werden kann. Das Steuermodul 100 hat weiterhin einen Vorratseingang 1-1, an den ein (nicht dargestellter) Druckluft-Vorratsbehälter anschließbar ist. Weiterhin sind Druckluftausgänge 21, 22 für den Anschluss von pneumatischen Bremselementen vorgesehen.

Zur Darstellung der Bremsbasisfunktionen sind vier Magnetventile 110, 112, 114, 116 sowie zwei Relaisventile 118, 120 vorgesehen. Im dargestellten Schaltzustand der Magnetventile 110, 112, 114, 116 gelangt Steuerdruck vom Steuereingang 4 über das 3/2-Ventil 112 zu den 2/2-Ventilen 116 und von dort zu den jeweiligen Relaisventilen 118, 120. In Abhängigkeit von der Größe des Steuerdrucks wird den Druckluftausgängen 21, 22 über die Relaisventile 118, 120 Druck zugeführt. Die Magnetventile 114, 116 können unabhängig voneinander in ihren jeweils anderen Schaltzustand überführt werden, so dass die Druckluftausgänge 21, 22 individuell mit Druckluft beaufschlagt werden können.

Kombiniert mit den möglichen Schaltzuständen der Magnetventile 114, 116 ist es weiterhin möglich, die Magnetventile 110, 112 in ihre jeweils nicht dargestellten Schaltzustände zu überführen. Dann kann einem Relaisventil 118, 120 oder beiden Relaisventilen 118, 120 je nach Schaltzustand der Magnetventile 114, 116 am Steuereingang der am Druckluft-vorratseingang 1-1 anliegende Druck zugeführt werden.

Das Steuermodul 100 umfasst einen weiteren Eingang 1-2. Dieser Eingang 1-2 ist über ein Doppel-Rückschlagventil 138 angebunden, das mit Ausgängen 23, 24 in Verbindung steht. Diese Ausgänge 23, 24 sind für den Anschluss weiterer federbetätigter Bremselemente vorgesehen.

Das Steuermodul 100 ist weiterhin mit zwei 3/2-Magnetventilen 130, 132 ausgestattet. In dem dargestellten Schaltzustand der Magnetventile 130, 132 sind die diesen Magnetventilen 130, 132 zugeordneten Ausgänge 122, 124 über eine Entlüftung 3 mit der Atmosphäre verbunden. In den jeweils nicht dargestellten Schaltzuständen kann Druckluft vom Druckluft-Vorratseingang 1-1 und die jeweiligen Magnetventile 130, 132 zu den Druckluftausgängen 122, 124 und von dort zu den Zusatzverbrauchern 126, 128 gelangen.

Bei den Zusatzverbrauchern kann es sich beispielsweise um ein Hebe-Senk-Ventil mit automatischer Rückstellung 126 und ein Liftachsventil 128 handeln. Weiterhin kann beispielsweise eine Antriebsschlupfregelung als Zusatzverbraucher von dem Steuermodul 100 pneumatisch angesteuert werden.

Dem Steuermodul 100 ist weiterhin eine elektronische Steuereinheit 136 zugeordnet, die vorzugsweise in das Steuermodul 100 integriert ist. Diese elektronische Steuereinheit übernimmt die Ansteuerung der Magnetventile 110, 112, 114, 116, 130, 132, und sie erfasst die Ausgangssignale der Drucksensoren 142, 144, 146, 148, 150. Dabei misst der Drucksensor 142 den Steuerdruck, und der Drucksensor 146 misst den Vorratsdruck. Die Drucksensoren 144 und 148 messen die Drücke an den Druckausgängen 21 beziehungsweise 22. Der Drucksensor 150 ist beispielsweise dafür vorgesehen, den Beladungszustand des Anhängers über den Anschluss 42 zu erfassen.

Die den gemessenen Drücken entsprechenden Signale werden von der elektronischen Steuereinheit des Steuermoduls verarbeit. Insbesondere wird sichergestellt, dass ein ausreichender Druck für die Bereitstellung der Basisbremsfunktionen zur Verfügung steht, bevor den Zusatzverbrauchern 126, 128 Druckluft zugeführt wird.

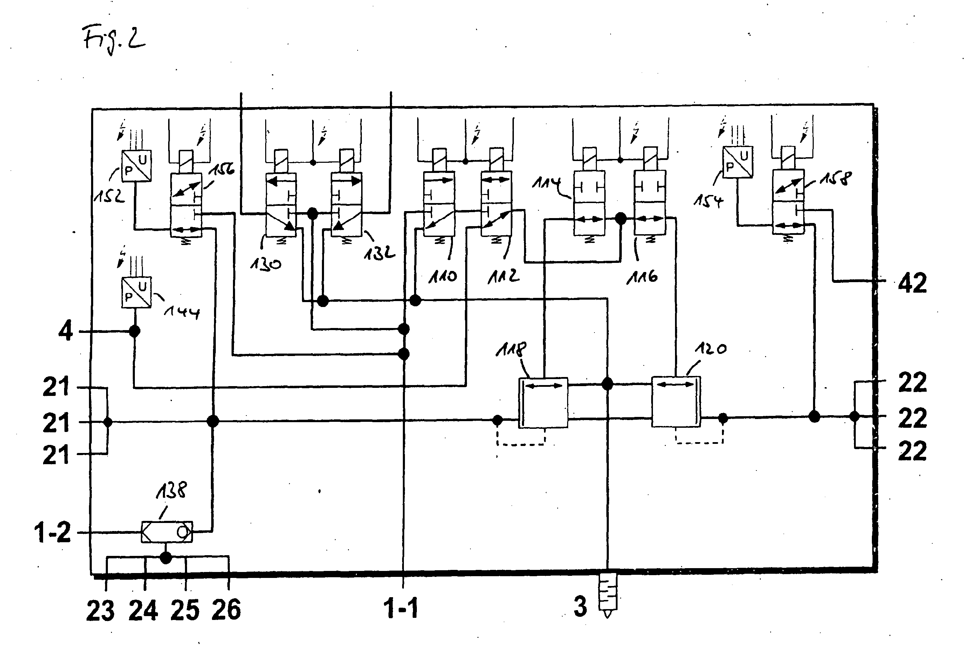

Figur 2 zeigt eine schematische Darstellung einer zweiten Ausführungsform eines erfindungsgemäßen Steuermoduls. Die zweite Ausführungsform entspricht in weiten Teilen der ersten Ausführungsform der Erfindung, so dass auf die Beschreibung der sich entsprechenden Bauteile und Funktionen verzichtet werden kann. Die in Figur 1 dargestellten Zusatzverbraucher und die elektronische Steuerung sind zur Vereinfachung der Darstellung in Figur 2 nicht gezeigt. Im Unterschied zu der ersten Ausführungsform gemäß Figur 1 ist bei der zweiten Ausführungsform gemäß Figur 2 die Erfassung der Drücke durch drei Drucksensoren 144, 152, 154 realisiert. Dies gelingt durch die zusätzliche Anwesenheit von zwei weiteren 2/2-Magnetentilen 156, 158. Im dargestellten unbestromten Zustand des Magnetventils 156 wird durch den Drucksensor 152 der Bremsdruck am Ausgang 21 erfasst. Es ist erforderlich, eine solche Erfassung mit hoher Frequenz vorzunehmen, so dass sich der unbestromte Zustand des Magnetventils 156 hierfür anbietet. Seltener ist der Vorratsdruck am Druckluft-Vorratseingang 1-1 zu messen. Dies gelingt im bestromten Zustand des Magnetventils 156. In vergleichbarer Weise dient das Magnetventil 158 dem wahlweisen Erfassen der Drücke an den Anschlüssen 22 und 42. Es liegt ebenfalls im Rahmen der Erfindung, die Schaltzustände im Hinblick auf die Bestromung umzukehren, das heißt im bestromten Zustand den Bremsdruck am Ausgang 21 und im unbestromten Zustand den Vorratsdruck am Druckluft-Vorratseingang 1-1 zu erfassen.

Weitere Unterschiede zwischen den Ausführungsformen gemäß den Figuren 1 und 2 bestehen darin, dass bei der Ausführungsform gemäß Figur 2 zwei weitere Anschlüsse 25, 26 an dem Doppel-Rückschlagventil 138 vorgesehen sind und dass die beiden Entlüftungsausgänge 3 der Figur 1 zu einem Entlüftungsausgang gemäß Figur 2 zusammengefasst sind.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 1-1: Druckluft-Vorratseingang
- 1-2: Eingang
- 3: Entlüftung
- 4: Druckluft-Steuereingang
- 21: Druckluftausgang
- 22: Druckluftausgang
- 23: Ausgang
- 24: Ausgang
- 25: Ausgang
- 26: Ausgang
- 42: Anschluss
- 100: Steuermodul
- 110: Magnetventil / 3/2-Ventil
- 112: Magnetventil / 3/2-Ventil
- 114: Magnetventil / 2/2-Ventil
- 116: Magnetventil / 2/2-Ventil
- 118: Relaisventil
- 120: Relaisventil
- 122: Ausgang
- 124: Ausgang
- 126: Zusatzverbraucher
- 128: Zusatzverbraucher
- 130: Magnetventil
- 132: Magnetventil
- 136: Steuereinheit
- 138: Doppel-Rückschlagventil
- 142: Drucksensor
- 144: Drucksensor
- 146: Drucksensor
- 148: Drucksensor
- 150: Drucksensor
- 152: Drucksensor
- 154: Drucksensor
- 156: Magnetventil / 2/2-Ventil
- 158: Magnetventil / 2/2-Ventil

## Patentansprüche

1. Steuermodul für eine Anhängerbremsanlage eines Nutzkraftfahrzeugs, mit
- mindestens einem Druckluft-Steuereingang (4) zum Zuführen eines Steuerdrucks,
- mindestens einem Druckluft-Vorratseingang (1-1) zum Zuführen eines Vorratsdrucks,
- mehreren Druckluftausgängen (21, 22) für den Anschluss von Bremselementen und
- mehreren elektrisch ansteuerbaren Magnetventilen (110, 112, 114, 116) sowie mehreren mit den Magnetventilen zusammenwirkenden Relaisventilen (118, 120), die so angeordnet sind, dass die Druckluftausgänge (21, 22) in Abhängigkeit der Schaltzustände der Magnetventile (110, 112, 114, 116) mit Druck beaufschlagt werden können,
**dadurch gekennzeichnet,**
- **dass** mindestens ein weiterer Druckluftausgang (122, 124) für den Anschluss und die pneumatische Ansteuerung mindestens eines Zusatzverbrauchers (126, 128) vorgesehen ist,
- **dass** mindestens ein weiteres ansteuerbares Magnetventil (130, 132) so angeordnet ist, dass der weitere Druckluftausgang (122, 124) in Abhängigkeit des Schaltzustands des Magnetventils (130, 132) mit Druck beaufschlagt werden kann und
- **dass** dem mindestens einen Zusatzverbraucher (126, 128) erst dann Druckluft zuführbar ist, wenn ein ausreichender Druck für die Bereitstellung der Basisbremsfunktionen zur Verfügung steht.

2. Steuermodul nach Anspruch 1, **dadurch gekennzeichnet,**
- **dass** zwei Druckluftausgänge (21, 22) für den Anschluss von Bremselementen und vier mit zwei Relaisventilen (118, 120) zusammenwirkende Magnetventile (110, 112, 114, 116) vorgesehen sind und
- **dass** zwei Druckluftausgänge (122, 124) für den Anschluss von Zusatzverbrauchern (126, 128) und zwei weitere diesen Druckluftausgängen (122, 124) zugeordnete Magnetventile (130, 132) vorgesehen sind.

3. Steuermodul nach Anspruch 1 oder 2, **dadurch gekennzeichnet,**
- **dass** die mit den Relaisventilen zusammenwirkenden Magnetventile zwei 2/2-Ventile (114, 116) und zwei 3/2-Ventile (110, 112) umfassen und
- **dass** das mindestens eine weitere Magnetventil (130, 132) ein 3/2-Ventil ist.

4. Steuermodul nach einem der vorangehenden Ansprüche, **dadurch gekennzeichnet, dass** Drucksensoren (142, 144, 146, 148, 150, 152, 154) zum Erfassen von Drücken an Anschlüssen des Steuermoduls vorgesehen sind.

5. Steuermodul nach einem der vorangehenden Ansprüche, **dadurch gekennzeichnet, dass** mindestens ein Drucksensor (152, 154) über ein Magnetventil (156, 158) je nach Schaltzustand des Magnetventils mit unterschiedlichen Messpunkten verbunden werden kann.

6. Steuermodul nach einem der vorangehenden Ansprüche, **dadurch gekennzeichnet, dass** als Zusatzverbraucher (126, 128) ein Hebe-Senk-Ventil mit automatischer Rückstellung (RTR-Ventil) und/oder ein Liftachsventil (LAC-Ventil) und/oder ein 2/2-Ventil anschließbar sind.

7. Steuermodul nach einem der vorangehenden Ansprüche, **dadurch gekennzeichnet, dass** es eine elektronische Steuerung (136) zum Ansteuern der Magnetventile und zum Erfassen und Verarbeiten von druckabhängigen Signalen aufweist.

8. Verfahren zum Steuern pneumatischer Funktionen eines Nutzkraftfahrzeuganhängers mit einem Steuermodul mit
- mindestens einem Druckluft-Steuereingang (4) zum Zuführen eines Steuerdrucks,
- mindestens einem Druckluft-Vorratseingang (1-1) zum Zuführen eines Vorratsdrucks,
- mehreren Druckluftausgängen (21, 22) für den Anschluss von Bremselementen und
- mehreren elektrisch ansteuerbaren Magnetventilen (110, 112, 114, 116) sowie mehreren mit den Magnetventilen zusammenwirkenden Relaisventilen (118, 120), die so angeordnet sind, dass die Druckluftausgänge (21, 22) in Abhängigkeit der Schaltzustände der Magnetventile mit Druck beaufschlagt werden,
**dadurch gekennzeichnet,**
- **dass** über mindestens einen weitere Druckluftausgang (122, 124) mindestens ein Zusatzverbraucher (126, 128) pneumatisch angesteuert wird,
- **dass** mindestens ein weiteres elektrisch ansteuerbares Magnetventil (130, 132) so angeordnet ist, dass der weitere Druckluftausgang (122, 124) in Abhängigkeit des Schaltzustands des Magnetventils (130, 132) mit Druck beaufschlagt wird und
- **dass** dem mindestens einen Zusatzverbraucher (126, 128) erst dann Druckluft zugeführt wird, wenn ein ausreichender Druck für die Bereitstellung der Basisbremsfunktionen zur Verfügung steht.

9. Verfahren nach Anspruch 8, **dadurch gekennzeichnet, dass** zum Erfassen eines Drucks an einem einer Betriebsbremse zugeordneten Ausgang (21, 22) ein Drucksensor (152, 154) über ein 2/2-Magnetventil (156, 158) im unbestromten Zustand mit dem Ausgang (21, 22) verbunden wird und dass zum Erfassen eines Drucks an einem Anschluss (1-1, 42) des Steuermoduls (100) der Drucksensor (152, 154) über das 2/2-Magnetventil (156, 158) im bestromten Zustand mit dem Anschluss (1-1, 42) verbunden wird.

10. Verfahren nach Anspruch 8 oder 9, **dadurch gekennzeichnet, dass** über das Steuermodul als Zusatzverbraucher (126, 128) ein Hebe-Senk-Ventil mit automatischer Rückstellung (RTR-Ventil) und/oder ein Liftachsventil (LAC-Ventil) und/oder ein 2/2-Ventil pneumatisch angesteuert werden.

11. Nutzfahrzeug mit einem Steuermodul nach einem der Ansprüche 1 bis 7.

## Claims

1. Control module for a trailer brake system of a commercial vehicle, comprising
- at least one compressed-air control inlet (4) for the supply of a control pressure,
- at least one compressed-air reservoir inlet (1-1) for the supply of a reservoir pressure,
- a plurality of compressed-air outlets (21, 22) for the connection of braking elements, and
- a plurality of electrically controllable solenoid-operated valves (110, 112, 114, 116) as well as a plurality of relay valves (118, 120) interacting with said solenoid-operated valves, which are so disposed that said compressed-air outlets (21, 22) may be subjected to pressure as a function of the switching conditions of said solenoid-operated valves (110, 112, 114, 116),
**characterized in**
- **that** at least one further compressed-air outlet (122, 124) is provided for the connection and the pneumatic control of at least one additional load (126, 128),
- **that** at least one further controllable solenoid-operated valve (130, 132) is so disposed that said further compressed-air outlet (122, 124) may be subjected to pressure as a function of the switching condition of said solenoid-operated valve (130, 132), and
- **that** compressed air can be supplied to said at least one additional load (126, 128) only when a sufficient pressure level is available for providing the basic braking functions.

2. Control module according to Claim 1, **characterized in**
- **that** two compressed-air outlets (21, 22) for the connection of braking elements and four solenoid-operated valves (110, 112, 114, 116) interacting with two relay valves (118, 120) are provided, and
- **that** two compressed-air outlets (122, 124) for the connection of additional loads (126, 128) and two further solenoid-operated valves (130, 132) associated with these compressed-air outlets (122, 124) are provided.

3. Control module according to Claim 1 or 2, **characterized in**
- **that** said solenoid-operated valves interacting with said relay valves comprise two 2/2-way valves (114, 116) and two 3/2-way valves (110, 112), and
- **that** said at least one further solenoid-operated valve (130, 132) is a 3/2-way valve.

4. Control module according to any of the preceding Claims, **characterized in that** pressure sensors (142, 144, 146, 148, 150, 152, 154) are provided for the detection of pressures at connectors of the control module.

5. Control module according to any of the preceding Claims, **characterized in that** at least one pressure sensor (152, 154) is adapted to be connected via a solenoid-operated valve (156, 158) to different measuring sites, depending on the switching condition of said solenoid-operated valve.

6. Control module according to any of the preceding Claims, **characterized in that** a lifting/lowering valve with automatic return function (RTR valve) and/or one lifting axle valve (LAC valve) and/or one 2/2-way valve may be connected as additional loads (126, 128).

7. Control module according to any of the preceding Claims, **characterized in that** it comprises an electronic controller (136) for controlling said solenoid-operated valves and for detecting and processing pressure-dependent signals.

8. Method of controlling pneumatic functions of a commercial vehicle trailer, comprising a control module including
- at least one compressed-air control inlet (4) for the supply of a control pressure,
- at least compressed-air reservoir inlet (1-1) for the supply of a reservoir pressure,
- a plurality of compressed-air outlets (21, 22) for the connection of braking elements, and
- a plurality of electrically controllable solenoid-operated valves (110, 112, 114, 116) as well as a plurality of relay valves (118, 120) interacting with said solenoid-operated valves, which are so disposed that said compressed-air outlets (21, 22) may be subjected to pressure as a function of the switching conditions of said solenoid-operated valves (110, 112, 114, 116),
**characterized in**
- **that** at least one additional load (126, 128) is pneumatically controlled via at least one further compressed-air outlet (122, 124),
- **that** at least one further controllable solenoid-operated valve (130, 132) is so disposed that said further compressed-air outlet (122, 124) is subjected to pressure as a function of the switching condition of said solenoid-operated valve (130, 132), and
- **that** compressed air is supplied to said at least one additional load (126, 128) only when a sufficient pressure level is available for providing the basic braking functions.

9. Method according to Claim 8, **characterized in that** a pressure sensor (152, 154) is connected via a 2/2-way solenoid-operated valve (156, 158) in the deenergized condition to one outlet (21, 22) for detecting a pressure on this outlet (21, 22) associated with a service brake, and that said pressure sensor (152, 154) is connected to one connector (1-1, 42) via said 2/2-way solenoid-operated valve (156, 158) in the energized condition for detecting a pressure on this connector (1-1, 42) of the control module.

10. Method according to Claim 8 or 9, **characterized in that** a lifting/lowering valve with automatic return function (RTR valve) and/or a lifting axle valve (LAC valve) and/or a 2/2-way valve are pneumatically controlled as additional loads (126, 128) via said control module.

11. Commercial vehicle comprising a control module according to any of the Claims 1 to 7.

## Revendications

1. Module de commande pour un système de freinage de remorque d'un véhicule utilitaire, comprenant
- au moins une entrée de commande d'air comprimé (4) pour l'alimentation d'une pression de commande,
- au moins une entrée de réservoir d'air comprimé (1-1) pour l'alimentation d'une pression de réservoir,
- une pluralité des sorties d'air comprimé (21, 22) pour le raccord des éléments de freinage, et
- une pluralité des vannes magnétiques à commande électrique (110, 112, 114, 116) ainsi qu'une pluralité des vannes de relais (118, 120) coopérant avec lesdites vannes magnétiques, qui sont montées d'une telle façon, qu'on puisse agir sur lesdites sorties d'air comprimé (21, 22) par une pression en fonction des états de commutation desdites vannes magnétiques (110, 112, 114, 116),
**caractérisé en ce**
- **qu**'au moins une sortie d'air comprimé supplémentaire (122, 124) est disposée pour le raccord et la commande pneumatique d'au moins une unité utilisatrice supplémentaire (126, 128),
- en ce qu'au moins une vanne magnétique commandable supplémentaire (130, 132) est disposée d'une telle façon, qu'on puisse agir sur ladite sortie d'air comprimé supplémentaire (122, 124) à une pression en fonction d'état de commutation de ladite vanne magnétique (130, 132), et
- en ce que l'alimentation de ladite au moins une unité utilisatrice supplémentaire (126, 128) en air comprimé n'est possible que quand un niveau de pression suffisant est disponible afin d'achever les fonctions de freinage de base.

2. Module de commande selon la revendication 1, **caractérisé en ce**
- **que** deux sorties d'air comprimé (21, 22) pour le raccord des éléments de freinage et quatre vannes magnétiques (110, 112, 114, 116) coopérant avec deux vannes de relais (118, 120) sont disposées, et
- en ce que deux sorties d'air comprimé (122, 124) pour le raccord des unités utilisatrices supplémentaires (126, 128) et deux autres vannes magnétiques (130, 132) affectées à ces sorties d'air comprimé (122, 124) sont montées.

3. Module de commande selon la revendication 1 ou 2, **caractérisé en ce**
- **que** lesdites vannes magnétiques coopérant avec lesdites vannes de relais comprennent deux vannes à 2/2 voies (114, 116) et deux vannes à 3/2 voies (110, 112), et
- en ce que ladite au moins une vanne magnétique supplémentaire (130, 132) est une vanne à 3/2 voies.

4. Module de commande selon une quelconque des revendications précédentes, **caractérisé en ce que** des détecteurs de pression (142, 144, 146, 148, 150, 152, 154) sont disposés pour la détection de pressions aux raccords du module de commande.

5. Module de commande selon une quelconque des revendications précédentes, **caractérisé en ce qu'**au moins un détecteur de pression (152, 154) est apte à être raccordé via une vanne magnétique (156, 158) aux points de mesure différents, en fonction de l'état de commutation de ladite vanne magnétique.

6. Module de commande selon une quelconque des revendications précédentes, **caractérisé en ce qu'**une vanne de levage/abaissement à fonction de retour automatique (vanne RTR) et/ou une vanne de levage d'axe (vanne LAC) et/ou une vanne à 2/2 voies sont raccordables en tant que des unités utilisatrices supplémentaires (126, 128).

7. Module de commande selon une quelconque des revendications précédentes, **caractérisé en ce qu'**il comprend une unité de commande électronique (136) à commander lesdites vannes magnétiques et à détecter et traiter des signaux dépendentes de la pression.

8. Procédé de commander des fonctions pneumatiques d'une remorque de véhicule utilitaire, comprenant un module de commande, qui renferme les caractériques suivantes :
- au moins une entrée de commande d'air comprimé (4) pour l'alimentation d'une pression de commande,
- au moins une entrée de réservoir d'air comprimé (1-1) pour l'alimentation d'une pression de réservoir,
- une pluralité des sorties d'air comprimé (21, 22) pour le raccord des éléments de freinage, et
- une pluralité des vannes magnétiques à commande électrique (110, 112, 114, 116) ainsi qu'une pluralité des vannes de relais (118, 120) coopérant avec lesdites vannes magnétiques, qui sont montées d'une telle façon, qu'on puisse agir sur lesdites sorties d'air comprimé (21, 22) à une pression en fonction des états de commutation desdites vannes magnétiques (110, 112, 114, 116),
**caractérisé en ce**
- **qu**'au moins une unité utilisatrice supplémentaire (126, 128) est commandée par voie pneumatique via au moins une sortie d'air comprimé supplémentaire (122, 124),
- en ce qu'au moins une vanne magnétique commandable supplémentaire (130, 132) est disposée d'une telle façon, qu'on puisse agir sur ladite sortie d'air comprimé supplémentaire (122, 124) à une pression en fonction d'état de commutation de ladite vanne magnétique (130, 132), et
- en ce que de l'air comprimé n'est alimenté à ladite au moins une unité utilisatrice supplémentaire (126, 128) que quand un niveau de pression suffisant est disponible afin d'achever les fonctions de freinage de base.

9. Procédé selon la revendication 8, **caractérisé en ce qu'**un détecteur de pression (152, 154) est raccordé via une vanne magnétique à 2/2 voies (156, 158) en état hors tension à une sortie (21, 22) à détecter une pression à cette sortie (21, 22) affectée à un frein de service, et **en ce que** ledit détecteur de pression (152, 154) est raccordé à un raccord (1-1, 42) via ladite vanne magnétique à 2/2 voies (156, 158) en état sous tension à détecter une pression à ce raccord (1-1, 42) du module de commande.

10. Procédé selon la revendication 8 ou 9, **caractérisé en ce qu'**une vanne de levage/abaissement à fonction de retour automatique (vanne RTR) et/ou une vanne de levage d'essieu (vanne LAC) et/ou une vanne à 2/2 voies sont commandées par voie pneumatique en tant que des unités utilisatrices supplémentaires (126, 128) via ledit module de commande.

11. Véhicule utilitaire comprenant un module de commande selon une quelconque des revendications 1 à 7.
